# EUROPÄISCHE PATENTSCHRIFT

(11) **EP 2 836 401 B1**
(45) Veröffentlichungstag und Bekanntmachung des Hinweises auf die Patenterteilung: **08.05.2019**
(21) Anmeldenummer: 13709464.5
(22) Anmeldetag: 18.03.2013
(51) Int. Cl.: B60S 1/38

(54) **WISCHBLATTVORRICHTUNG**
WIPER BLADE DEVICE
DISPOSITIF DE BALAI D'ESSUIE-GLACE

(30) Priorität: 10.04.2012 DE 102012205783
(43) Veröffentlichungstag der Anmeldung: 18.02.2015
(73) Patentinhaber: Robert Bosch GmbH, 70442 Stuttgart (DE)
(72) Erfinder: DEPONDT, Helmut, B-3010 Kessel-Lo (BE); SAEVELS, Peter, B-3384 Attenrode (BE)
(86) Internationale Anmeldenummer: PCT/EP2013/055511
(87) Internationale Veröffentlichungsnummer: WO 2013/152920

(56) Entgegenhaltungen:
- DE-A1- 1 942 345
- DE-A1- 4 319 139
- DE-A1- 10 120 467
- DE-A1-102007 030 169
- DE-B- 1 116 090
- US-A1- 2011 232 022

## Beschreibung

### Stand der Technik

Die Erfindung geht aus von einer Wischblattvorrichtung nach dem Oberbegriff des Patentanspruchs 1.

Es ist bereits eine Wischblattvorrichtung mit einer Aufnahmeeinheit, die einen Federschienenaufnahmebereich zur Aufnahme einer Federschiene aufweist, bekannt.

Beispielsweise zeigt die DE 43 19 139 A1 eine gattungsgemäße Wischblattvorrichtung.

### Offenbarung der Erfindung

Die Erfindung geht aus von einer Wischblattvorrichtung mit einer Aufnahmeeinheit, die einen Federschienenaufnahmebereich zur Aufnahme einer Federschiene aufweist.

Es wird vorgeschlagen, dass die Aufnahmeeinheit zumindest ein erstes beweglich gelagertes Verschlusselement aufweist, das dazu vorgesehen ist, den Federschienenaufnahmebereich bei einer Montage der Federschiene in zumindest einer Richtung zu schließen, wodurch eine besonders einfache und sichere Montage der Federschiene erreicht werden kann. Unter einer "Aufnahmeeinheit" soll in diesem Zusammenhang insbesondere eine Einheit verstanden werden, die dazu vorgesehen ist, ein Bauteil aufzunehmen und/oder zu lagern. Bevorzugt weist die Aufnahmeeinheit einen Längskanal zur Aufnahme einer Federschiene auf. Besonders bevorzugt ist die Aufnahmeeinheit zu einer Kopplung mit einem Windabweiserelement und/oder einer Wischleiste vorgesehen. Unter einem "Federschienenaufnahmebereich" soll in diesem Zusammenhang insbesondere ein Bereich verstanden werden, in welchem in einem montierten Zustand eine Federschiene angeordnet ist. Bevorzugt wird der Federschienenaufnahmebereich vom Längskanal aufgespannt. Unter einer "Federschiene" soll in diesem Zusammenhang insbesondere eine federelastische Schiene verstanden werden, die zumindest eine Erstreckung aufweist, die in einem normalen Betriebszustand um zumindest 10 %, insbesondere um wenigstens 20 %, vorzugsweise um mindestens 30 % und besonders vorteilhaft um zumindest 50 % elastisch veränderbar ist, und die insbesondere eine von einer Veränderung der Erstreckung abhängige Gegenkraft erzeugt, die der Veränderung entgegenwirkt. Unter einer "Erstreckung" eines Elements soll in diesem Zusammenhang insbesondere ein maximaler Abstand zweier Punkte einer senkrechten Projektion des Elements auf eine Ebene verstanden werden. Vorzugsweise weist die Federschiene in einem unbelasteten Zustand im Wesentlichen eine Form eines gebogenen Stabs und besonders vorteilhaft eines abgeflachten, gebogenen Stabs auf. Besonders vorteilhaft ist eine Krümmung der Federschiene entlang einer Längserstreckung in einem unbelasteten Zustand größer als eine Krümmung einer Fahrzeugoberfläche eines Kraftfahrzeugs, insbesondere einer Fahrzeugscheibe, über die die Federschiene in wenigstens einem Betriebszustand geführt wird. Unter "beweglich" soll in diesem Zusammenhang insbesondere translatorisch und/oder rotatorisch verstanden werden. Unter "gelagert" soll dabei insbesondere über ein Scharnier, eine Schiene und/oder ein elastisches und/oder flexibles Material verbunden verstanden werden. Unter einem "Verschlusselement" soll in diesem Zusammenhang insbesondere ein Element verstanden werden, das dazu vorgesehen ist, den Federschienenaufnahmebereich bei einer Montage der Federschiene in zumindest einer Richtung zu schließen. Bevorzugt erstreckt sich das Verschlusselement zumindest über einen Großteil der Längserstreckung des Federschienenaufnahmebereichs und/oder des Längskanals, besonders bevorzugt über eine gesamte Länge des Federschienenaufnahmebereichs und/oder des Längskanals. Unter einem "Großteil" soll in diesem Zusammenhang insbesondere mehr als 50%, bevorzugt mehr als 80%, besonders bevorzugt mehr als 95% verstanden werden. Unter "schließen" soll dabei insbesondere abdecken und/oder abschirmen verstanden werden. Bevorzugt soll unter "schließen" ein Vorgang verstanden werden, bei dem die Aufnahmeeinheit bei einer Montage der Federschiene von einem geöffneten Zustand in einen geschlossenen Zustand gebracht wird. Unter einem "geöffneten Zustand" soll dabei insbesondere ein Zustand verstanden werden, in welchem die Aufnahmeeinheit in zumindest einer Richtung geöffnet ist. Bevorzugt lässt sich die Federschiene im geöffneten Zustand in die Aufnahmeeinheit einbringen. Unter einem "geschlossenen Zustand" soll dabei insbesondere ein Zustand verstanden werden, in welchem die Aufnahmeeinheit in zumindest einer Richtung geschlossen ist. Unter "vorgesehen" soll insbesondere speziell ausgelegt und/oder ausgestattet verstanden werden.

In einer weiteren Ausgestaltung der Erfindung wird vorgeschlagen, dass das erste Verschlusselement einstückig mit einem Basiselement der Aufnahmeeinheit ausgebildet ist, wodurch insbesondere zusätzliche Verbindungsbauteile vorteilhaft vermieden werden können. Unter "einstückig" soll insbesondere stoffschlüssig verbunden, wie beispielsweise durch einen Schweißprozess und/oder Klebeprozess usw., und besonders vorteilhaft angeformt verstanden werden, wie durch die Herstellung aus einem Guss und/oder durch die Herstellung in einem Ein- oder Mehrkomponentenspritzgussverfahren.

Ferner wird vorgeschlagen, dass die Wischblattvorrichtung eine Wischleiste umfasst, die einstückig mit einem Basiselement der Aufnahmeeinheit ausgebildet ist, wodurch die Wischblattvorrichtung besonders leicht und kompakt ausgebildet werden kann. Unter einer "Wischleiste" soll in diesem Zusammenhang insbesondere eine gummiartige Leiste verstanden werden, die dazu vorgesehen ist, eine Fahrzeugscheibe, insbesondere eine Kraftfahrzeugscheibe, zu wischen.

Ein vorteilhaft großer Öffnungsbereich kann erreicht werden, wenn das erste Verschlusselement schwenkbar um eine Längsachse der Aufnahmeeinheit gelagert ist. Unter einer "Längsachse" soll in diesem Zusammenhang insbesondere eine Achse verstanden werden, die parallel zu einer Längsrichtung verläuft. Unter einer "Längsrichtung" soll dabei in diesem Zusammenhang insbesondere eine Richtung verstanden werden, die zumindest im Wesentlichen parallel zu einer Hauptlängserstreckung eines Elements verläuft. Unter "im Wesentlichen" soll in diesem Zusammenhang insbesondere eine Abweichung von weniger als 10°, bevorzugt von weniger als 5° verstanden werden. Unter einer "Hauptlängserstreckung" soll in diesem Zusammenhang insbesondere eine größtmögliche Erstreckung verstanden werden.

Weist die Wischblattvorrichtung ein Windabweiserelement auf, das einstückig mit einem Bauteil der Aufnahmeeinheit ausgebildet ist, kann vorteilhaft Gewicht eingespart und eine Festigkeit der Wischblattvorrichtung erhöht werden. Unter einem "Windabweiserelement" soll in diesem Zusammenhang insbesondere ein Element verstanden werden, das dazu vorgesehen ist, einen auf die Wischblattvorrichtung wirkenden Fahrtwind abzuweisen und/oder für ein Anpressen einer Wischlippe auf eine Fahrzeugscheibe zu nutzen. Bevorzugt erstreckt sich das Windabweiserelement über zumindest 50%, besonders bevorzugt über zumindest 70%, ganz besonders bevorzugt über zumindest 90% einer Gesamtlängserstreckung der Federschiene.

Eine besonders stabile und belastbare Bauform der Wischblattvorrichtung kann erreicht werden, wenn das Windabweiserelement einstückig mit dem ersten Verschlusselement der Aufnahmeeinheit ausgebildet ist.

Erfindungsgemäß weist das Windabweiserelement zumindest ein Rastelement auf, das dazu vorgesehen ist, in einem montierten Zustand eine Bewegung des Windabweiserelements relativ zu einem Basiselement der Aufnahmeeinheit zu vermeiden. So kann eine Montage der Wischblattvorrichtung besonders schnell und kostengünstig erfolgen. Unter einem "Rastelement" soll in diesem Zusammenhang insbesondere ein federelastisches Element zur Herstellung einer Rastverbindung verstanden werden, das dazu vorgesehen ist, bei einer Montage elastisch ausgelenkt zu werden.

Umfasst die Aufnahmeeinheit ein Basiselement, welches einstückig mit dem Windabweiserelement in einem Zweikomponentenextrusionsverfahren hergestellt ist, können unterschiedliche Materialien vorteilhaft verwendet werden. Unter einem "Basiselement" soll in diesem Zusammenhang insbesondere ein Bauteil verstanden werden, das sich in einem montierten Zustand über zumindest einen Großteil einer Längserstreckung der Federschiene erstreckt und dazu vorgesehen ist, eine Auflagefläche für die Federschiene bereitzustellen und/oder die Wischleiste zu befestigen. Bevorzugt ist das Basiselement in einem montierten Zustand zwischen einer Wischlippe der Wischleiste und der Federschiene angeordnet.

### Zeichnung

Weitere Vorteile ergeben sich aus der folgenden Zeichnungsbeschreibung. In der Zeichnung sind vier Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Schnittdarstellung einer nicht beanspruchten Wischblattvorrichtung in einem geöffneten Zustand,
- Fig. 2: eine Schnittdarstellung der Wischblattvorrichtung nach Figur 1 in einem geschlossenen Zustand,
- Fig. 3: eine Schnittdarstellung einer erfindungsgemäßen Wischblattvorrichtung mit einem Windabweiserelement,
- Fig. 4: eine perspektivische Ansicht einer nicht beanspruchten Wischblattvorrichtung und
- Fig. 5: eine perspektivische Ansicht einer nicht beanspruchten Wischblattvorrichtung.

### Beschreibung der Ausführungsbeispiele

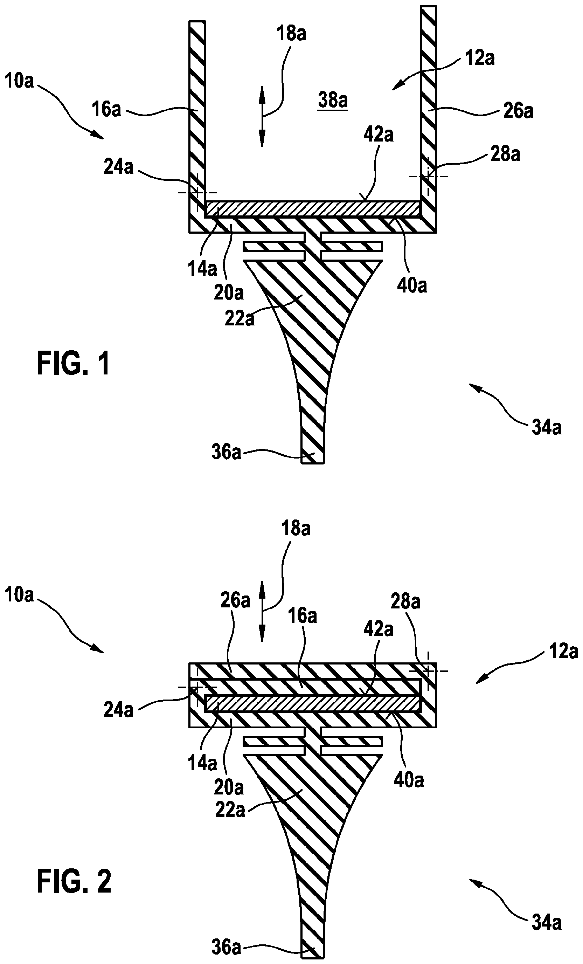

Figur 1 zeigt ein Wischblatt 34a mit einer nicht beanspruchten Wischblattvorrichtung, die eine Aufnahmeeinheit 10a umfasst. Die Aufnahmeeinheit 10a weist einen Federschienenaufnahmebereich 12a zur Aufnahme einer Federschiene 14a auf. Das Wischblatt 34a ist zum Wischen einer Scheibe, insbesondere einer Kraftfahrzeugscheibe (nicht dargestellt), vorgesehen. Dazu umfasst die Wischblattvorrichtung eine Wischleiste 22a, die einstückig mit einem Basiselement 20a der Aufnahmeeinheit 10a ausgebildet ist. Die Wischleiste 22a weist eine Wischlippe 36a auf, die in einem Betriebszustand über eine Kraftfahrzeugscheibe geführt wird. Die Federschiene 14a ist aus einem Federstahl hergestellt und elastisch auslenkbar. Es ist in diesem Zusammenhang jedoch auch denkbar, die Federschiene 14a aus einem anderen, dem Fachmann als sinnvoll erscheinenden Material herzustellen.

Die Aufnahmeeinheit 10a weist ein erstes beweglich gelagertes Verschlusselement 16a auf, das den Federschienenaufnahmebereich 12a bei einer Montage der Federschiene 14a in einer Richtung 18a schließt. Des Weiteren weist die Aufnahmeeinheit 10a ein zweites beweglich gelagertes Verschlusselement 26a auf. Das erste und zweite Verschlusselement 16a, 26a sind rotatorisch bzw. schwenkbar gelagert. Es ist in diesem Zusammenhang jedoch auch denkbar, zumindest ein Verschlusselement 16a, 26a translatorisch bzw. linear bewegbar auszubilden. Die Schwenkbewegung wird durch ein elastisch leicht verformbares Material, aus dem die Verschlusselemente 16a, 26a hergestellt sind, erzielt. Es ist in diesem Zusammenhang jedoch auch denkbar, Scharniergelenkverbindungen zur Erzielung einer Schwenkbewegung anzuwenden, die zwischen den Verschlusselementen 16a, 26a und dem Basiselement 20a angeordnet sind.

Der Federschienenaufnahmebereich 12a ist vom Basiselement 20a, dem ersten Verschlusselement 16a und dem zweiten Verschlusselement 26a begrenzt. Das Basiselement 20a, das erste Verschlusselement 16a und das zweite Verschlusselement 26a formen einen im Querschnitt im Wesentlichen U-förmigen Längskanal 38a für die Federschiene 14a.

Bei der Montage wird zunächst die Federschiene 14a im Federschienenaufnahmebereich 12a auf das Basiselement 20a aufgelegt. Dabei liegt eine Unterseite 40a der Federschiene 14a am Basiselement 20a an. Das erste Verschlusselement 16a wird in Richtung der Federschiene 14a geschwenkt und liegt schließlich flächig an einer der Unterseite 40a gegenüberliegenden Oberseite 42a der Federschiene 14a an. Das zweite Verschlusselement 26a wird anschließend in Richtung des ersten Verschlusselements 16a geschwenkt und liegt schließlich flächig am ersten Verschlusselement 16a an.

Die Verschlusselemente 16a, 26a erstrecken sich über einen Großteil der Längserstreckung des Federschienenaufnahmebereichs 12a und des Längskanals 38a.

Das erste und zweite Verschlusselement 16a, 26a sind einstückig mit dem Basiselement 20a der Aufnahmeeinheit 10a ausgebildet. Das erste und zweite Verschlusselement 16a, 26a und das Basiselement 20a sind in einem Einkomponentenextrusionsverfahren hergestellt. Es ist in diesem Zusammenhang jedoch auch denkbar, das erste und zweite Verschlusselement 16a, 26a und das Basiselement 20a in einem Mehrkomponentenextrusionsverfahren, einem Klebeverfahren oder einem Schweißverfahren stoffschlüssig miteinander zu verbinden.

Das erste Verschlusselement 16a ist schwenkbar um eine Längsachse 24a der Aufnahmeeinheit 10a gelagert. Die Längsachse 24a ist durch einen flexiblen Bereich zwischen dem ersten Verschlusselement 16a und dem Basiselement 20a definiert, welcher sich um die Längsachse 24a auslenken lässt. Die Längsachse 24a steht senkrecht zur Schnittebene und somit im Wesentlichen parallel zu einer Hauptlängserstreckung des Wischblatts 34a bzw. der Federschiene 14a.

Das zweite Verschlusselement 26a ist schwenkbar um eine Längsachse 28a der Aufnahmeeinheit 10a gelagert. Die Längsachse 28a ist durch einen flexiblen Bereich zwischen dem zweiten Verschlusselement 26a und dem Basiselement 20a definiert, welcher sich um die Längsachse 28a auslenken lässt. Die Längsachse 28a steht senkrecht zur Schnittebene und somit im Wesentlichen parallel zu einer Hauptlängserstreckung des Wischblatts 34a bzw. der Federschiene 14a. Die Längsachsen 24a, 28a verlaufen im Wesentlichen parallel zueinander.

In Figur 2 ist die Wischblattvorrichtung in einem zweiten Montageschritt gezeigt. Das zweite Verschlusselement 26a liegt flächig am ersten Verschlusselement 16a an. Durch ein Ultraschallschweißverfahren werden das erste Verschlusselement 16a und das zweite Verschlusselement 26a stoffschlüssig miteinander verbunden. Im montierten Zustand sind das erste Verschlusselement 16a und das zweite Verschlusselement 26a einstückig ausgebildet.

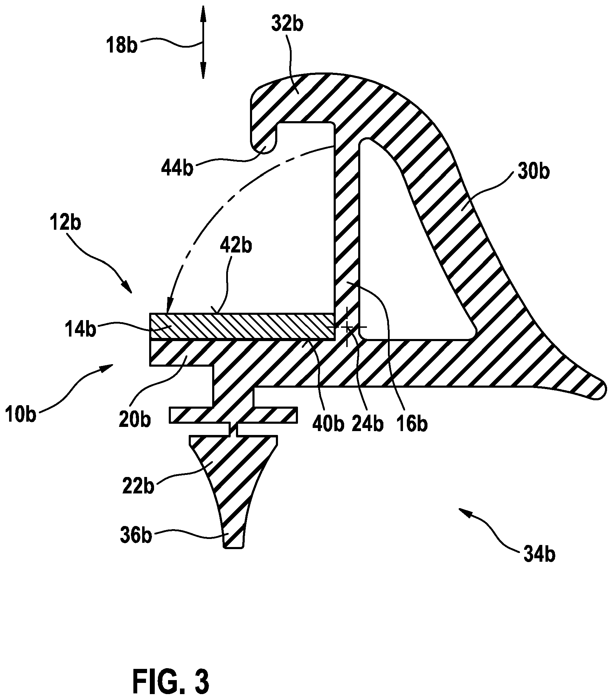

In den Figuren 3 bis 5 sind drei weitere Ausführungsbeispiele gezeigt. Die nachfolgenden Beschreibungen beschränken sich im Wesentlichen auf die Unterschiede zwischen den Ausführungsbeispielen, wobei bezüglich gleich bleibender Merkmale und Funktionen auf die Beschreibung des ersten Ausführungsbeispiels verwiesen werden kann. Zur Unterscheidung der Ausführungsbeispiele ist der Buchstabe a in den Bezugszeichen des Ausführungsbeispiels in den Figuren 1 und 2 durch die Buchstaben b bis d in den Bezugszeichen der Ausführungsbeispiele der Figuren 3 bis 5 ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung des ersten Ausführungsbeispiels verwiesen werden.

Die Wischblattvorrichtung weist ein Windabweiserelement 30b auf, das einstückig mit einem ersten Verschlusselement 16b ausgebildet ist. Das Windabweiserelement 30b erstreckt sich vollständig über eine Gesamtlängserstreckung einer Federschiene 14b. Ferner weist das Windabweiserelement 30b ein Rastelement 32b auf, das in einem montierten Zustand eine Bewegung des Windabweiserelements 30b relativ zu einem Basiselement 20b einer Aufnahmeeinheit 10b vermeidet. Dazu wird das Rastelement 32b bei einer Montage zunächst entgegen einer Federkraft aus einer Ausgangsposition ausgelenkt und bewegt sich dann federelastisch in die Ausgangsposition zurück. Dabei greift ein Rasthaken 44b unter das Basiselement 20b. Das Rastelement 32b liegt im montierten Zustand an der Federschiene 14b seitlich an.

Das Windabweiserelement 30b ist einstückig mit dem Basiselement 20b der Aufnahmeeinheit 10b ausgebildet. Dazu sind das Windabweiserelement 30b und das Basiselement 20b in einem Zweikomponentenextrusionsverfahren hergestellt.

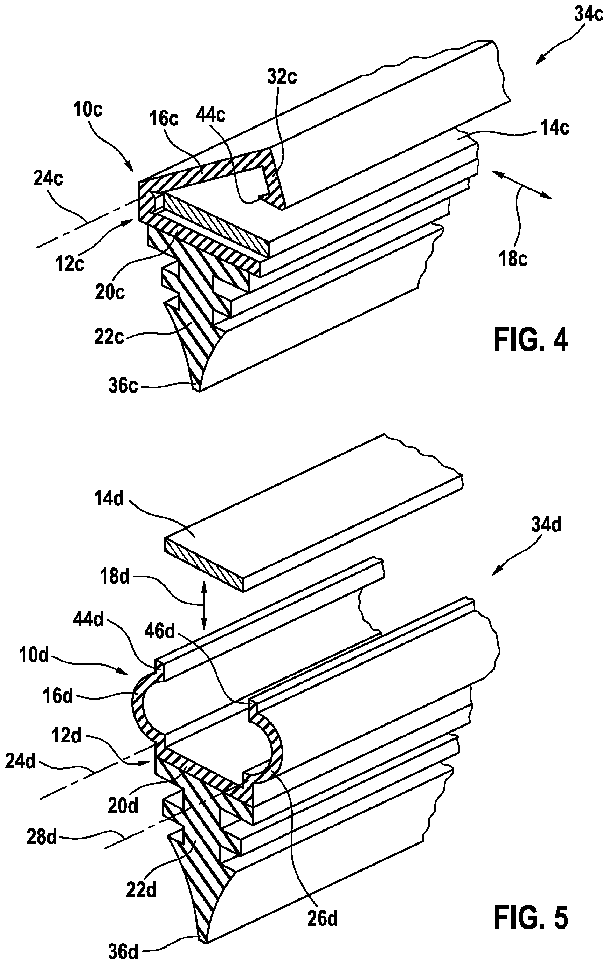

In der Figur 4 ist ein weiteres Ausführungsbeispiel gezeigt. Die Wischblattvorrichtung umfasst eine Aufnahmeeinheit 10c, die einen Federschienenaufnahmebereich 12c zur Aufnahme einer Federschiene 14c aufweist. Die Aufnahmeeinheit 10c weist ein erstes beweglich gelagertes Verschlusselement 16c auf, das den Federschienenaufnahmebereich 12c bei einer Montage der Federschiene 14c in eine Richtung 18c schließt. Das erste Verschlusselement 16c ist schwenkbar um eine Längsachse 24c der Aufnahmeeinheit 10c gelagert.

Die Wischblattvorrichtung umfasst eine Wischleiste 22c, die einstückig mit einem Basiselement 20c der Aufnahmeeinheit 10c ausgebildet ist. Das Basiselement 20c ist mit der Wischleiste 22c in einem Zweikomponentenextrusionsverfahren hergestellt. Das Basiselement 20c ist aus einem härteren Material hergestellt als die Wischleiste 22c und somit verstärkt ausgebildet. Das Basiselement 20c erstreckt sich vollständig über eine Gesamtlängserstreckung der Federschiene 14c.

Das Verschlusselement 16c ist einstückig mit dem Basiselement 20c ausgebildet. Ferner weist das Verschlusselement 16c ein Rastelement 32c auf, das in einem montierten Zustand eine Bewegung des Verschlusselements 16c relativ zum Basiselement 20c vermeidet. Das Rastelement 32c vermeidet hierbei eine Bewegung des beweglich gelagerten Verschlusselements 16c zur Wischleiste 22c. Dabei greift ein Rasthaken 44c unter das Basiselement 20c. Das Rastelement 32c liegt im montierten Zustand an der Federschiene 14c seitlich an.

In der Figur 5 ist ein weiteres Ausführungsbeispiel gezeigt. Die Wischblattvorrichtung weist eine Aufnahmeeinheit 10d auf, die einen Federschienenaufnahmebereich 12d zur Aufnahme einer Federschiene 14d aufweist. Die Aufnahmeeinheit 10d umfasst ein erstes und ein zweites beweglich gelagertes Verschlusselement 16d, 26d, die den Federschienenaufnahmebereich 12d bei einer Montage der Federschiene 14d in eine Richtung 18d schließen.

Die Verschlusselemente 16d, 26d erstrecken sich über einen Großteil einer Längserstreckung des Federschienenaufnahmebereichs 12d. Die Verschlusselemente 16d, 26d weisen jeweils einen im Wesentlichen halbkreisförmigen Querschnitt auf. Das erste und zweite Verschlusselement 16d, 26d sind einstückig mit einem Basiselement 20d der Aufnahmeeinheit 10d ausgebildet.

Das erste und zweite Verschlusselement 16d, 26d und das Basiselement 20d sind mit einer Wischleiste 22d in einem Zweikomponentenextrusionsverfahren hergestellt. Dabei weisen das erste und zweite Verschlusselement 16d, 26d und das Basiselement 20d nach dem Zweikomponentenextrusionsverfahren eine größere Härte auf als die Wischleiste 22d. Das erste und zweite Verschlusselement 16d, 26d und das Basiselement 20d sind aus einem gleichen Material hergestellt.

Zur Aufnahme der Federschiene 14d werden die zwei Verschlusselemente 16d, 26d elastisch um jeweils eine Längsachse 24d, 28d der Aufnahmeeinheit 10d geschwenkt. Die Längsachsen 24d, 28d sind durch einen flexiblen Bereich zwischen den Verschlusselementen 16d, 26d und dem Basiselement 20d definiert. Die Längsachsen 24d, 28d verlaufen somit im Wesentlichen parallel zu einer Hauptlängserstreckung der montierten Federschiene 14d. Die zwei Verschlusselemente 16d, 26d weisen jeweils einen Rasthaken 44d, 46d an einem freien Ende auf. Die Rasthaken 44d, 46d sind in einem montierten Zustand auf eine dem Fachmann als sinnvoll erscheinende Weise an einem Windabweiserelement (nicht dargestellt) befestigt.

## Patentansprüche

1. Wischblattvorrichtung mit einer Aufnahmeeinheit (10b) die einen Federschienenaufnahmebereich (12b) zur Aufnahme einer Federschiene (14b) aufweist, wobei die Aufnahmeeinheit (10b) zumindest ein erstes beweglich gelagertes Verschlusselement (16b) aufweist, das dazu vorgesehen ist, den Federschienenaufnahmebereich (12b) bei einer Montage der Federschiene (14b) in zumindest einer Richtung (18b) zu schließen, wobei das erste Verschlusselement (16b) in Richtung der Federschiene (14b) schwenkbar ist, wobei das erste Verschlusselement (16b) in einem montierten Zustand flächig an einer einer Unterseite gegenüberliegenden Ober-seite der Federschiene (14b) anliegt, **gekennzeichnet durch** ein Windabweiserelement (30b), das einstückig mit einem Bauteil der Aufnahmeeinheit (10b) ausgebildet ist und das Windabweiserelement (30b) zumindest ein Rastelement (32b) aufweist, das dazu vorgesehen ist, in einem montierten Zustand eine Bewegung des Windabweiserelements (30b) relativ zu einem Basiselement (20b) der Aufnahmeeinheit (10b) zu vermeiden..

2. Wischblattvorrichtung nach Anspruch 1, **dadurch gekennzeichnet,**
**dass** das erste Verschlusselement (16b) einstückig mit einem Basiselement (20b) der Aufnahmeeinheit (10b) ausgebildet ist.

3. Wischblattvorrichtung nach Anspruch 1 oder 2, **gekennzeichnet durch** eine Wischleiste (22b), die einstückig mit einem Basise-lement (20b) der Aufnahmeeinheit (10b) ausgebildet ist.

4. Wischblattvorrichtung nach einem der vorhergehenden Ansprüche,
**dadurch gekennzeichnet, dass** das erste Verschlusselement (16b) schwenkbar um eine Längsachse (24b) der Aufnahmeeinheit (10b) gelagert ist.

5. Wischblattvorrichtung nach Anspruch 1, **dadurch gekennzeichnet, dass** das Windabweiserelement (30b) einstückig mit dem ersten Verschlusselement (16b) der Aufnahmeeinheit (10b) ausgebildet ist.

6. Wischblattvorrichtung zumindest nach Anspruch 1, **dadurch gekennzeichnet, dass** die Aufnahmeeinheit (10b) ein Basiselement (20b) umfasst, welches einstückig mit dem Windabweiserelement (30b) in einem Zweikomponentenextrusionsverfahren hergestellt ist.

7. Wischblatt (34b) mit einer Wischblattvorrichtung nach einem der vorhergehenden Ansprüche.

## Claims

1. Wiper blade device with a receiving unit (10b) which has a spring-rail-receiving region (12b) for receiving a spring rail (14b), wherein the receiving unit (10b) has at least one first movably mounted closure element (16b) which is provided to close the spring-rail-receiving region (12b) in at least one direction (18b) when the spring rail (14b) is installed, wherein the first closure element (16b) is pivotable in the direction of the spring rail (14b), wherein the first closure element (16b) in a fitted state lies flat against an upper side of the spring rail (14b) that lies opposite a lower side, **characterized by** a wind defector element (30b) which is formed integrally with a component of the receiving unit (10b), and the wind deflector element (30b) has at least one latching element (32b) which is provided in order, in a fitted state, to avoid movement of the wind deflector element (30b) relative to a basic element (20b) of the receiving unit (10b).

2. Wiper blade device according to Claim 1, **characterized in that** the first closure element (16b) is formed integrally with a basic element (20b) of the receiving unit (10b).

3. Wiper blade device according to Claim 1 or 2, **characterized by** a wiper strip (22b) which is formed integrally with a basic element (20b) of the receiving unit (10b).

4. Wiper blade device according to one of the preceding claims, **characterized in that** the first closure element (16b) is mounted pivotably about a longitudinal axis (24b) of the receiving unit (10b).

5. Wiper blade device according to Claim 1, **characterized in that** the wind deflector element (30b) is formed integrally with the first closure element (16b) of the receiving unit (10b).

6. Wiper blade device at least according to Claim 1, **characterized in that** the receiving unit (10b) comprises a basic element (20b) which is produced integrally with the wind deflector element (30b) in a two-component extrusion process.

7. Wiper blade (34b) with a wiper blade device according to one of the preceding claims.

## Revendications

1. Ensemble d'essuie-glace doté d'une unité de réception (10b) qui présente une partie (12b) de réception de rail élastique qui reçoit un rail élastique (14b),
l'unité de réception (10b) présentant au moins un premier élément de fermeture (16b) monté de manière à pouvoir se déplacer et prévu pour fermer au moins dans une direction (18b) la partie (12b) de réception de rail élastique lors du montage du rail élastique (14b),
le premier élément de fermeture (16b) pouvant pivoter en direction du rail élastique (14b),
le premier élément de fermeture (16b) en situation montée reposant à plat sur une face supérieure, opposée à la face inférieure, du rail élastique (14b), **caractérisé par**
un élément (30b) de déviation du vent formé d'un seul tenant avec un composant de l'unité de réception (10b),
l'élément (30b) de déviation du vent présentant au moins un élément d'encliquetage (32b) prévu pour empêcher en situation montée un déplacement de l'élément (30b) de déviation du vent par rapport à un élément de base (20b) de l'unité de réception (10b).

2. Ensemble d'essuie-glace selon la revendication 1, **caractérisé en ce que** le premier élément de fermeture (16b) est formé d'un seul tenant avec un élément de base (20b) de l'unité de réception (10b).

3. Ensemble d'essuie-glace selon les revendications 1 ou 2, **caractérisé par** un balai d'essuie-glace (22b) formé d'un seul tenant avec un élément de base (20b) de l'unité de réception (10b).

4. Ensemble d'essuie-glace selon l'une des revendications précédentes, **caractérisé en ce que** le premier élément de fermeture (16b) est monté à pivotement autour d'un axe longitudinal (24b) de l'unité de réception (10b).

5. Ensemble d'essuie-glace selon la revendication 1, **caractérisé en ce que** l'élément (30b) de déviation du vent est formé d'un seul tenant avec le premier élément de fermeture (16b) de l'unité de réception (10b).

6. Ensemble d'essuie-glace selon au moins la revendication 1, **caractérisé en ce que** l'unité de réception (10b) comporte un élément de base (20b) réalisé d'un seul tenant avec l'élément (30b) de déviation du vent par une opération d'extrusion de deux composants.

7. Essuie-glace (34b) doté d'un ensemble d'essuie-glace selon l'une des revendications précédentes.
